# EUROPEAN PATENT APPLICATION

(11) **EP 1 699 169 A1**
(43) Date of publication of application: **06.09.2006**
(21) Application number: 06251094.6
(22) Date of filing: 01.03.2006
(51) Int. Cl.: H04L 12/18, H04L 29/06, H04L 12/28

(54) **Wireless base station, wireless mobile device, and wireless access network for reducing signalling traffic**

(30) Priority: 02.03.2005 JP 2005057475; 20.02.2006 JP 2006042029
(71) Applicant: FUJITSU LIMITED, Kawasaki-shi, Kanagawa 211-8588 (JP)
(72) Inventor: Mori, Masaru, Fujitsu Limited, Kawasaki-shi Kanagawa 211-8588 (JP)
(74) Representative: Hitching, Peter Matthew

(57) **Abstract**

In order that distribution of membership reports, which has been executed via a multicast router, can be executed by a wireless base station (5), a wireless mobile device (6-1) extracts information relating to a membership report from an IP packet transmitted (7002) from a client (4-1), generates (7005) tag information on the basis of the information extracted, and places the tag information on a wireless control channel of a wireless frame. Furthermore, the wireless mobile device places the IP packet on a traffic channel of the wireless frame, and sends (7006) the wireless frame including the tag information and the IP packet to the wireless base station. Such a process can alleviate delays of distribution of membership request that are needed in distribution of multicast data.

## Description

The present invention relates to wireless communication devices provided in a wireless access network connected to an IP network. In particular, but not exclusively, the present invention relates to a wireless mobile device (mobile station) and a wireless base station used in a wireless access network in which broadcast or multicast communications are allowed.

The technology of simultaneously transmitting IP packet data from a single server to a plurality of clients in an IP network is referred to as IP multicast.

Examples of service employing IP multicast include Internet broadcasting and push-type data distribution.

In IP multicast, in order to distribute IP packets from a multicast server to a plurality of specific computer terminals (hereinafter referred to as clients), a multicast tree rooted at a source of data is formed.

At a point of branching of the multicast tree, a multicast router having a function of finding the locations of clients belonging to a multicast group and a function of transferring multicast data packets is provided.

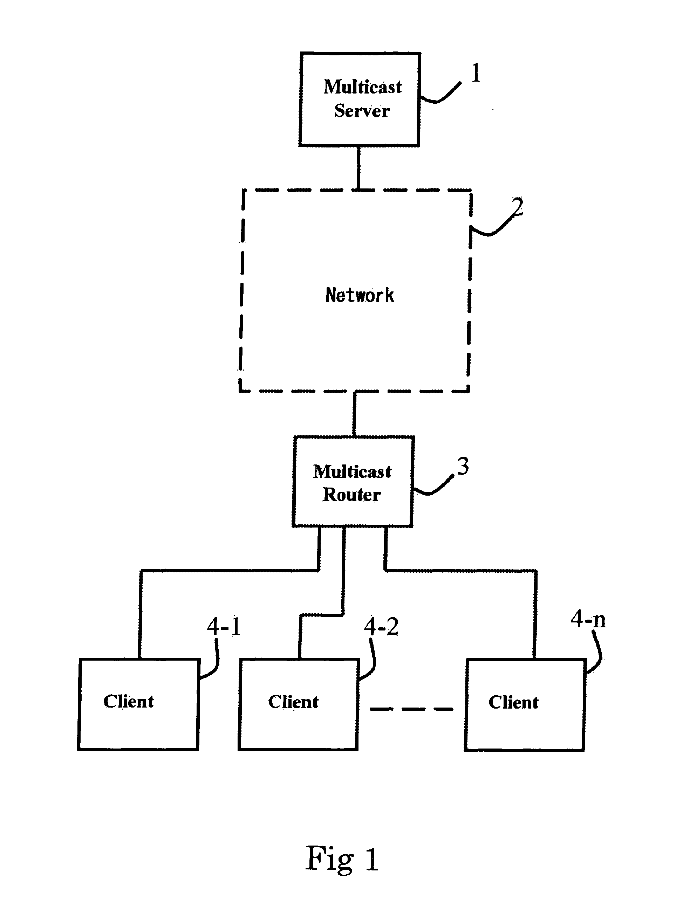

Fig. 1 is a diagram for explaining a multicast tree.

As shown in the figure, a multicast router 3 is connected to a network 2, such as an IP network, with a multicast server 1 that provides a service (data) located at the root of the tree.

The multicast router 3 interconnects a plurality of clients 4 (4-1 to 4-n).

The multicast router 3 has a function of copying IP packets and sending the IP packets to individual communication paths for the plurality of clients 4 at lower nodes of the network when transferring IP packets from the multicast server 1 that provides a service to the plurality of clients 4.

When a client 4 receives multicast data, the client 4 must participate in a multicast group and obtain a multicast group ID.

The multicast group ID is stored in IP packets used in distribution of multicast data.

A specific method of multicast is defined in IETF RFC 2236 as IGMP (Internet Group Management Protocol: IGMP version 2).

IETF RFC 2236 dictates formation of a multicast tree for determining a routing path from the multicast router 3 to a client 4 under the multicast router 3.

IETF RFC 2236 also dictates membership management of a multicast group for multicast between the clients 4 and the multicast router 3.

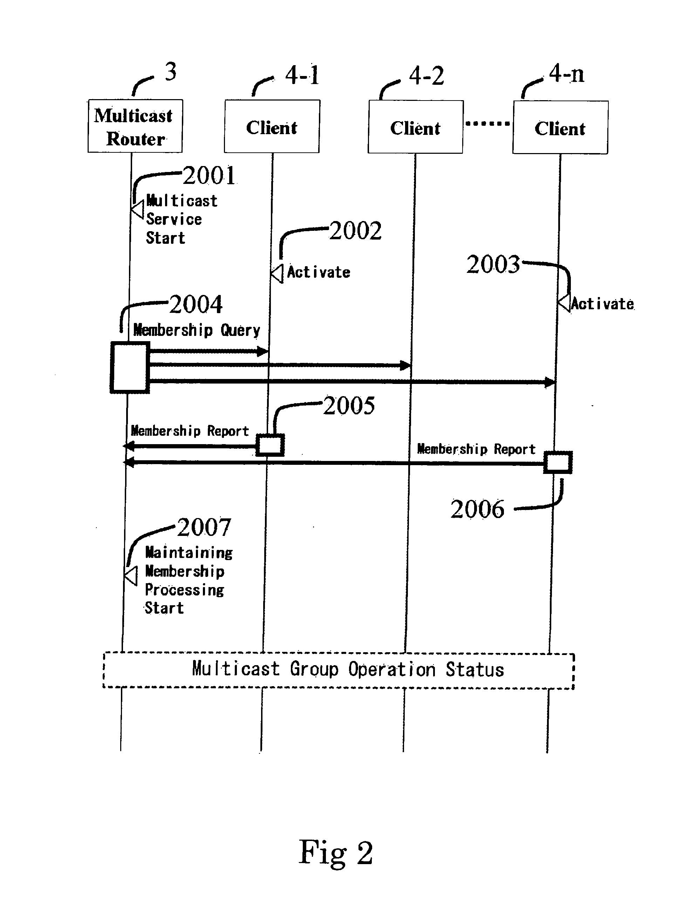

The membership management dictated in IETF RFC 2236 will be described with reference to Figs. 2 to 4. When data is distributed from the multicast server 1, according to the membership management, the multicast router 3 generates a number of copies of the data corresponding to the number of clients and distributes the copies to the clients.

Fig. 2 shows how a multicast group enters an operation status.

First, the multicast server 1 selects a multicast group ID for distribution of multicast data from a set of addresses that can be used for multicast.

A schedule of multicast and the multicast group ID are reported, for example, by e-mail, to potential participants (clients) of the multicast.

Then, the multicast server 1 starts a multicast service (step 2001).

In the figure, the clients 4-1 and 4-n are activated for receiving the multicast service at the time of the start of the multicast service (steps 2002 and 2003).

When the multicast service is started, the multicast router 3 issues a membership query to the clients 4-1 to 4-n located under the multicast router 3 (step 2004).

The clients 4-1 and 4-n issue membership reports for becoming members of the multicast to the multicast router 3 in order to receive the multicast service (Steps 2005 and 2006).

The multicast router 3 executes processing for maintaining membership, whereby the multicast group enters an operation status (step 2007).

The multicast router 3 stores the addresses of the members of the multicast in an internal routing table, generates a number of copies, corresponding to the number of the members of the multicast group, of the multicast data transmitted from the multicast server 1, and distributes the copies of the data.

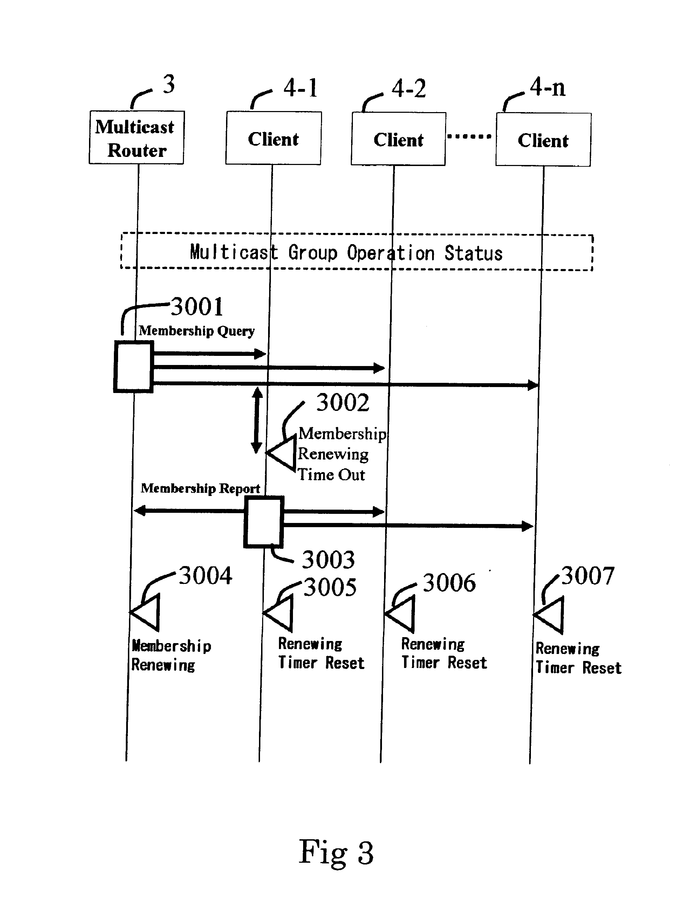

Fig. 3 shows a state where a multicast group is maintained after the multicast group enters an operation status.

The multicast router 3, on the basis of its own internal timer, issues membership queries to the clients 4-1 to 4-n located under the multicast router 3 (step 3001).

In Fig. 3, the client 4-1 counts a predetermined time T1 by an update timer that counts the predetermined time since the membership query, and issues a membership report to the multicast router 3 and each client (steps 3002 and 3003). In the figure, as an example, the client 4-1 issues a membership report. However, a membership report can be issued by any client.

Upon receiving the membership report from the client 4-1, the multicast router 3 updates the membership (step 3004).

Each client with a membership resets the value of the update timer that counts the predetermined time since the membership query (steps 3005 to 3007).

Fig. 4 shows a case where a client leaves a multicast group after the multicast group enters an operation status and a case where the multicast group is deactivated.

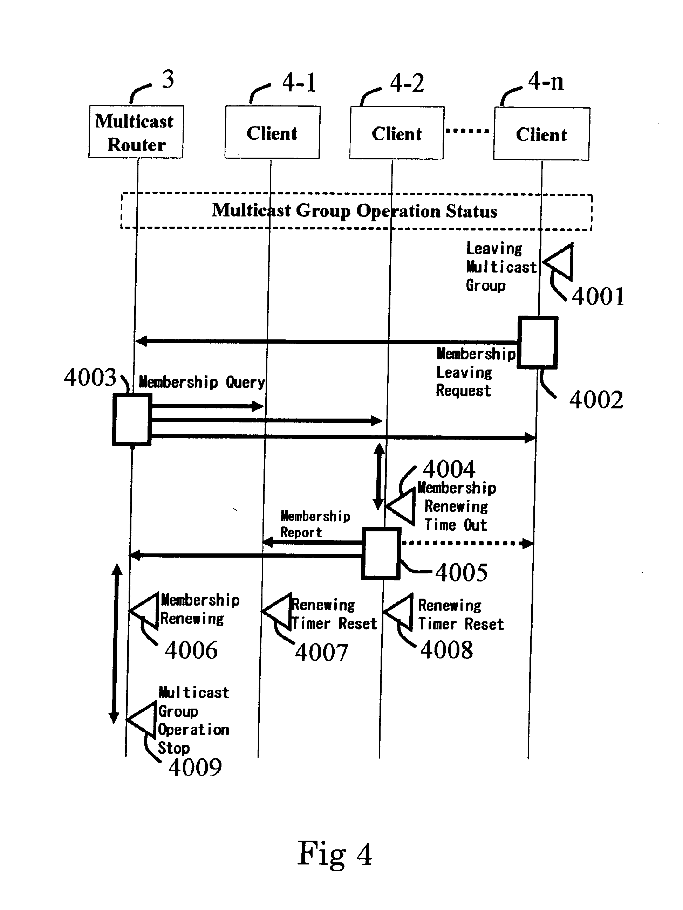

In Fig. 4, the client 4-n no longer wishes to receive multicast data, so that the client 4-n starts leaving the multicast group (step 4001).

The client 4-n sends a membership leaving request to the multicast router 3 (step 4002).

Upon receiving the membership leaving request, the multicast router 3 issues membership queries to the clients 4-1 to 4-n.

In the figure, the client 4-2 still wishes to receive multicast data. The client 4-2 counts by its timer a predetermined time T3 since the time of the membership query (step 4004). When a timeout of updating occurs, the client 4-2 sends a membership report to each client and the multicast router 3 (step 4005).

Each client resets its update timer (steps 4007 and 4008).

Upon receiving the membership report, the multicast router 3 updates the membership (step 4006).

Furthermore, the multicast router 3 activates the timer at the time of updating of the membership, and counts a predetermined time T4. When no membership report is received from the clients until the timer counts up, the multicast router 3 deactivates the multicast group (step 4009).

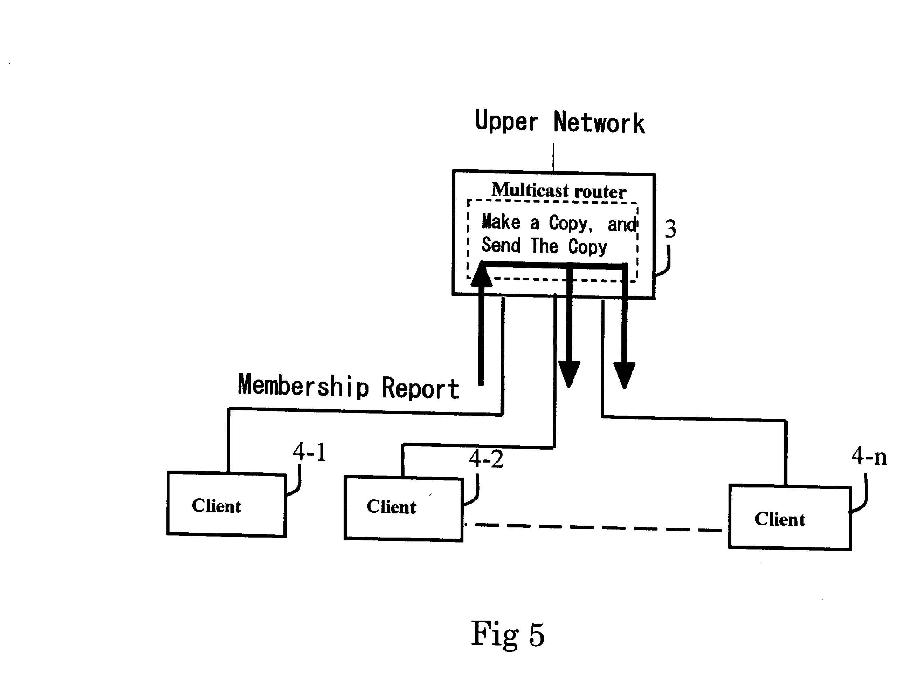

Fig. 5 shows a specific flow of signals in a multicast tree connected by a wired network. Fig. 5 shows a flow of signals involved in the membership report described with reference to Figs. 2 to 4.

The client 4-1 issues a membership report to the multicast router 3 in response to a membership query from the multicast router 3.

The multicast router 3 generates copies of the membership report and distributes the copies to the clients other than the client 4-1.

The multicast router 3 need not consider the client 4-n that has left in step S4002 shown in Fig. 4 as a multicast destination of a membership registration request. Thus, for example, by editing the routing table, the multicast router 3 refrains from sending packets to a client that has left.

As described above, in multicast communications, when a membership is registered and maintained, IP packets between the clients must be transmitted through the multicast router 3.

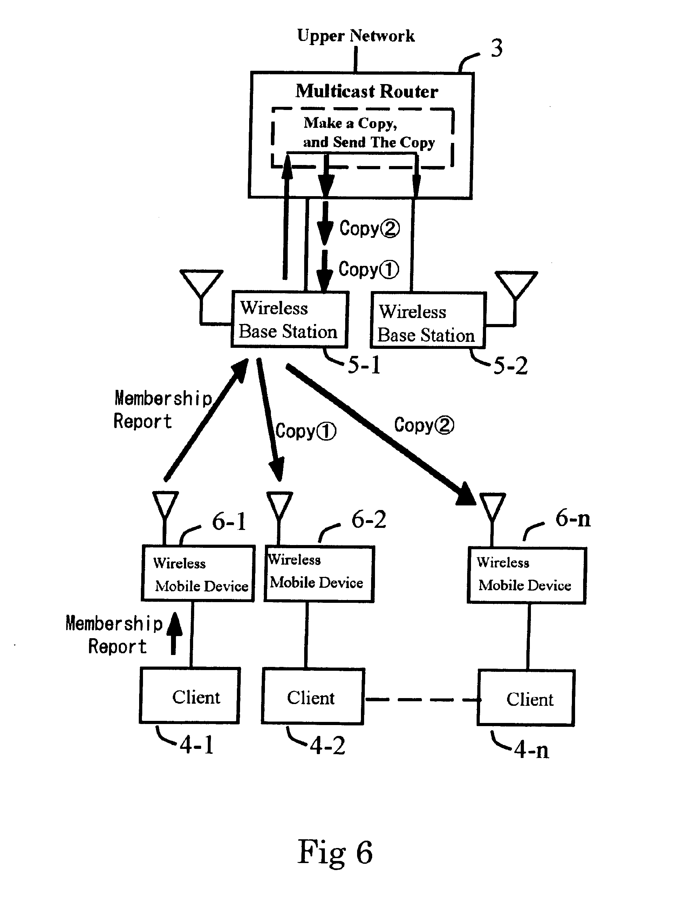

Fig. 6 shows a flow of signals in a case where a multicast tree is formed using a wireless network. Fig. 6 shows a configuration including a wireless network between the multicast router 3 and the clients.

Similarly to Fig. 5, Fig. 6 shows a flow of signals in a case where a membership report from a specific client is transmitted on a network.

An IP packet including a membership report from the client 4-1 is transmitted to a wireless mobile device 6-1, such as a cellular phone or a personal digital assistant (PDA).

The wireless mobile device 6-1 executes predetermined processing, and sends the processed IP packet to a wireless base station 5-1 by radio waves.

The wireless base station 5-1 sends the IP packet to the multicast router 3 via a wired network connected to the wireless base station 5-1.

Then, the multicast router 3 generates copies of the IP packet received including the membership report, and sends the copies to the wireless base station 5-1.

The wireless mobile devices 6-2 and 6-n, upon receiving the IP packets from the wireless base station 5-1, send IP packets including membership reports to the clients 4-2 and 4-n.

Techniques relating to multicast and related matters described above are described in Patent Documents 1 and 2 below:
[Patent Document 1] Japanese laid open Patent No. 2001-177564
[Patent Document 2] Japanese laid open Patent No. 2003-174478

Now, a flow of signals between a single wireless base station and wireless mobile devices connected under the wireless base station will be considered. When an IP packet for a membership report is sent from a client, the multicast router 3 generates a number of copies of the IP packet corresponding to the number of clients and sends the copies of the IP packet to a wireless network via a wired network.

Thus, as the number of wireless mobile devices connected under a single wireless base station increases, the number of the copies of the IP packet to be returned also increased. This causes an increase in traffic between the wireless base station and the multicast router.

Furthermore, since the wireless base station sequentially distributes IP packets to wireless mobile devices located under the wireless base station, wireless frames are sequentially allocated and transmitted to the individual wireless mobile devices. A wireless frame herein refers to a combination of a traffic channel for transmitting data and a control frame for exercising control between the wireless base station and a wireless mobile device.

The copies of the IP packet from the multicast router 3 are transmitted sequentially in wireless frames using wireless resources. Thus, the processing time taken to complete distribution of IP packets for membership reports to all the wireless mobile devices increases. This increase in time causes the problem of exceeding a timeout period of an update timer.

It is desirable to alleviate delays of distribution.

Embodiments of the present invention can be used in a wireless access network formed by a wireless base station connecting IP networks and a wireless mobile device under the supervision of the wireless base station.

In one embodiment, the wireless mobile device and the wireless base station insert a tag information into a wireless control channel, and the tag information includes information regarding a membership report in an IP packet transmitted from a client to a multicast router.

The wireless mobile devices and the wireless base station can process the membership report without a multicast router by using the tag information.

That is, an embodiment of the present invention has the effect of replacing communication of upper-layer information included in an IP packet with lower-layer communications between a wireless base station and wireless mobile devices.

In another embodiment, when a wireless base station issues a membership report to wireless mobile devices, the wireless base station directly issues a membership report to wireless mobile devices located under the wireless base station when a membership report from a wireless mobile device is received.

Other aspects of the present invention can provide methods of distribution adapted for use in wireless access networks, and methods carried out in the wireless base station and in the wireless mobile device to realize the distribution method.

Thus, in embodiments of the present invention, occurrence of delays of distribution can be avoided even when the number of wireless mobile devices increases.

Reference will now be made, by way of example, to the accompanying drawings, in which:
Figure 1 is a diagram for explaining a multicast tree.
Figure 2 is a diagram showing how a multicast group enters an operation status.
Figure 3 is a diagram showing a state where a multicast group is maintained.
Figure 4 is a diagram showing a case where a client leaves a multicast group and a case where a multicast group is deactivated.
Figure 5 is a Diagram showing a specific flow of signals in a multicast tree connected by a wired network.
Figure 6 is a diagram showing a flow of signals in a case where a multicast tree is formed by a wireless network.

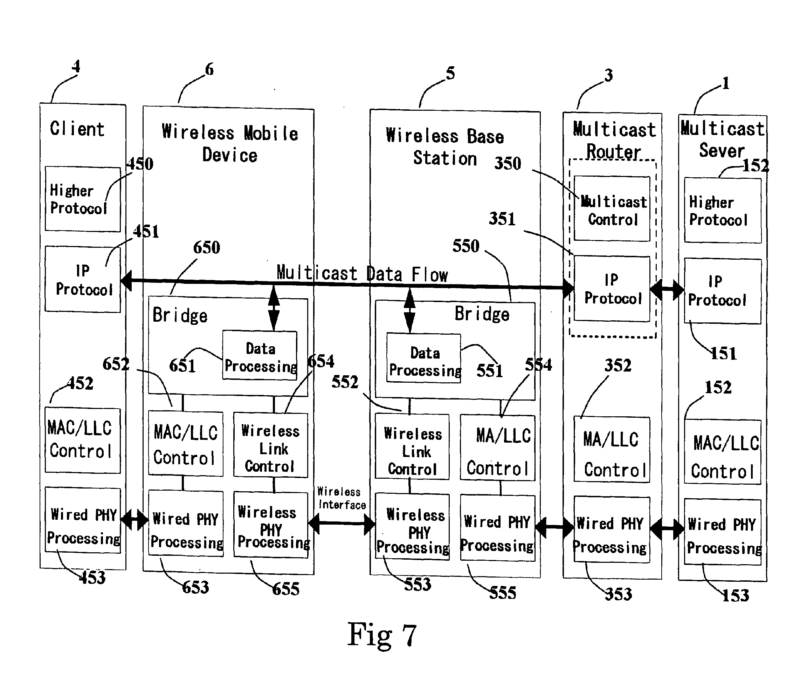

Figure 7 is a diagram showing a relationship between the OSI model and a system according to an embodiment.

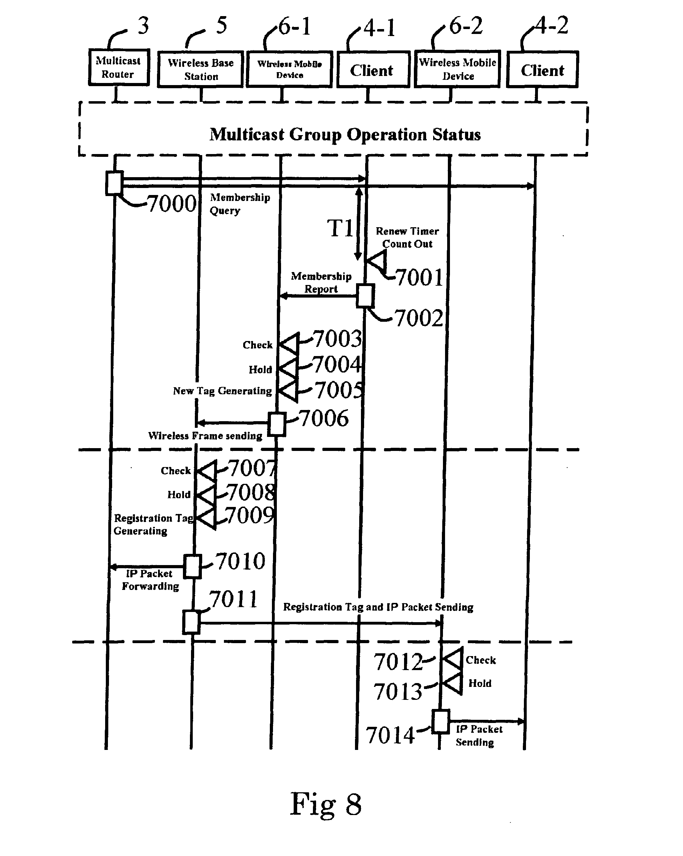

Figure 8 is a diagram for explaining passing of upper-layer information included in an IP packet.

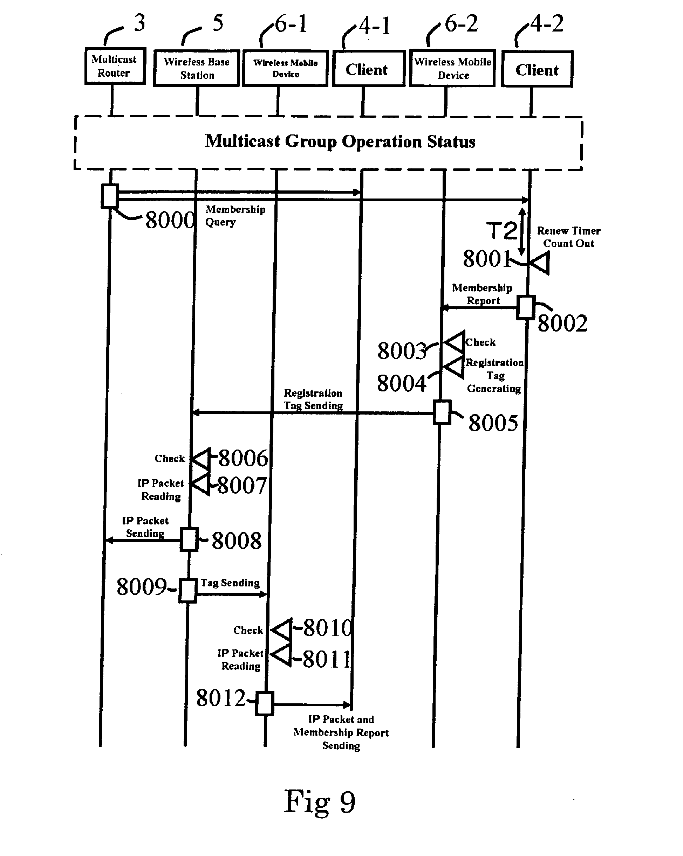

Figure 9 is a diagram showing a state after a multicast group becomes active.

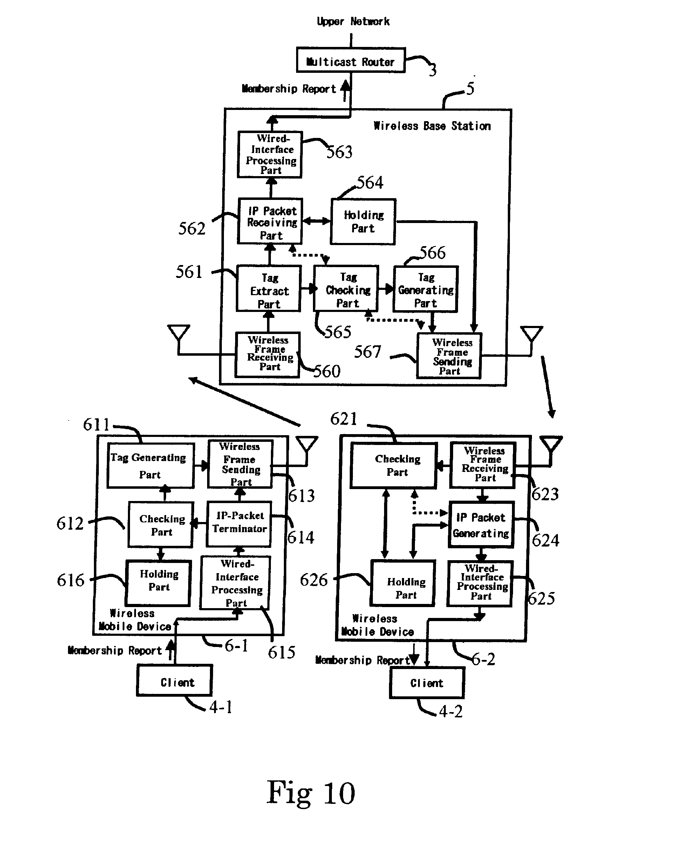

Figure 10 is a System configuration diagram for implementing operations shown in Figures, 8 and 9.

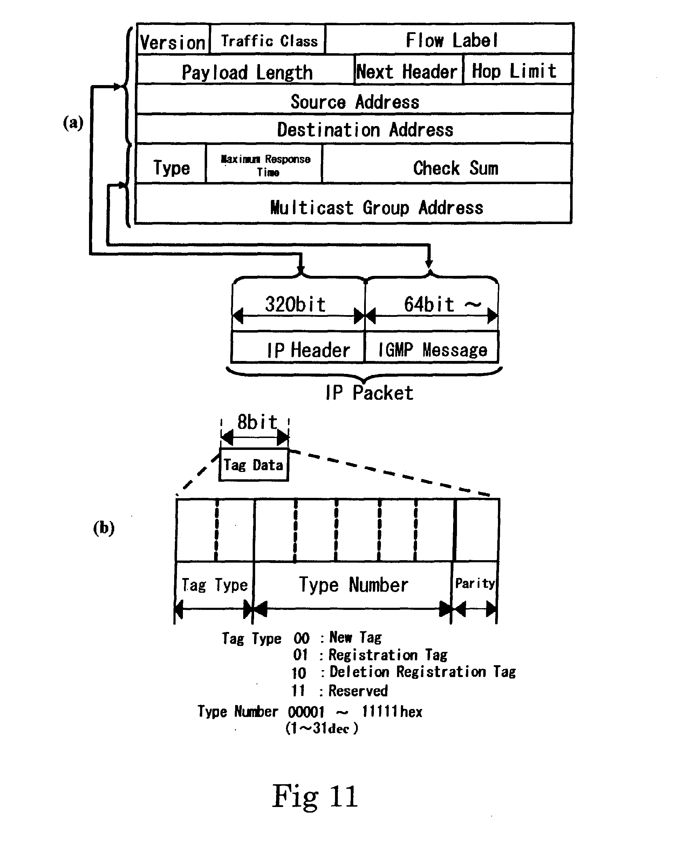

Figure 11 is a diagram for explaining a relationship between an IP packet and tag information.

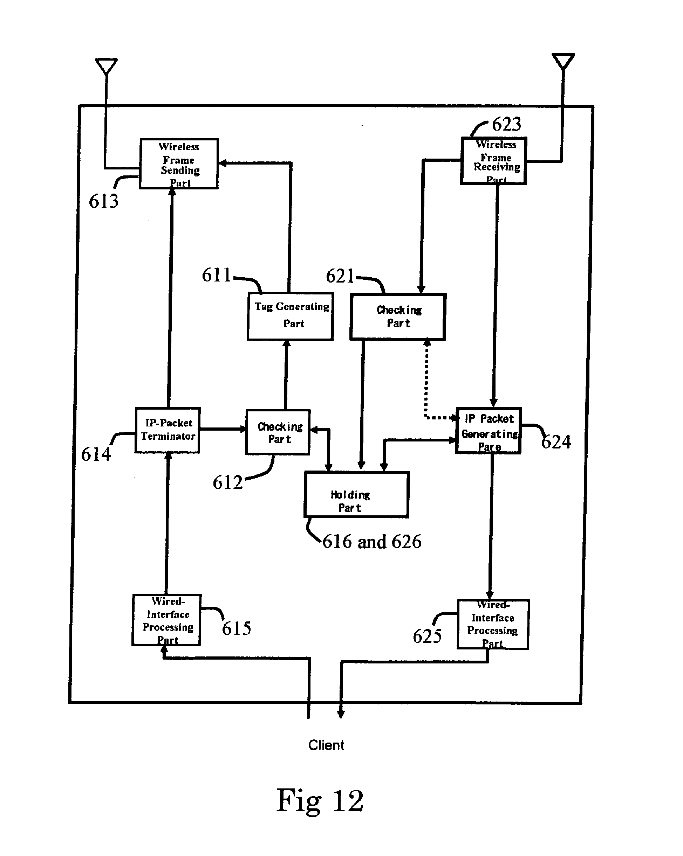

Figure 12 is a diagram showing the configurations of the wireless mobile devices 6-1 and 6-2.

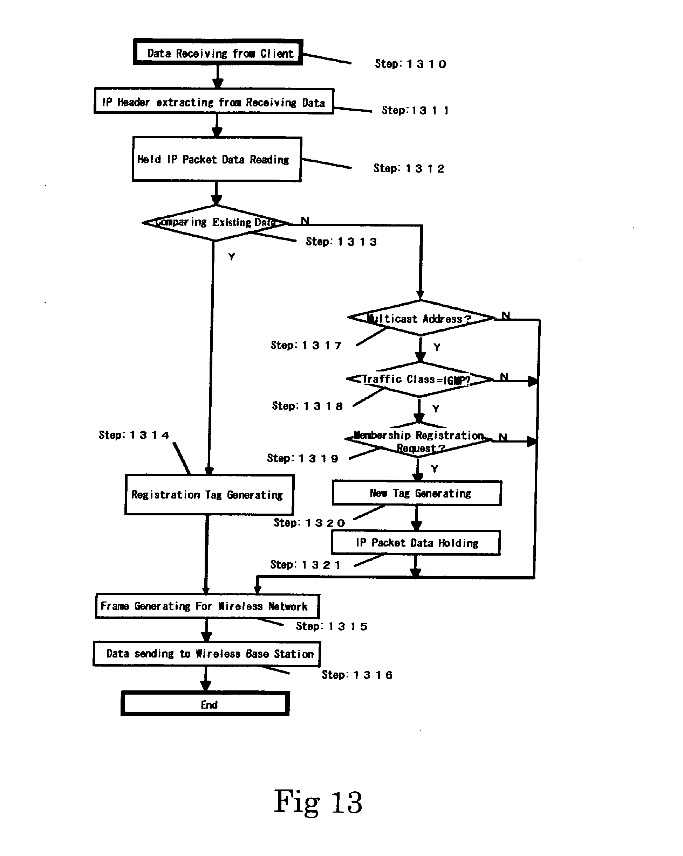

Figure 13 is a diagram showing a flow of processing executed when a wireless mobile device receives IP packet data from a client.

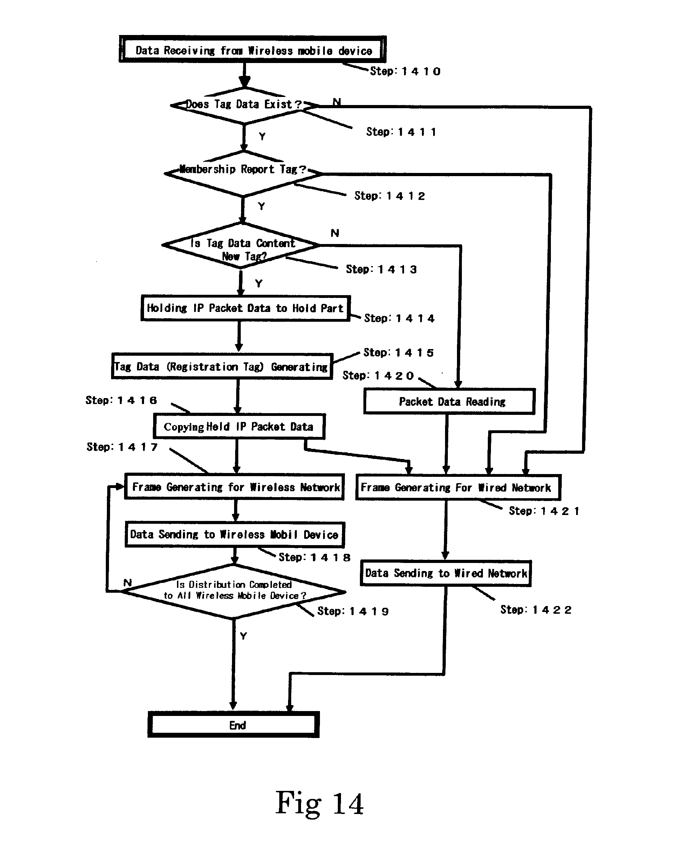

Figure 14 is a diagram showing a flow of processing executed when a wireless base station receives a wireless frame from a wireless mobile device.

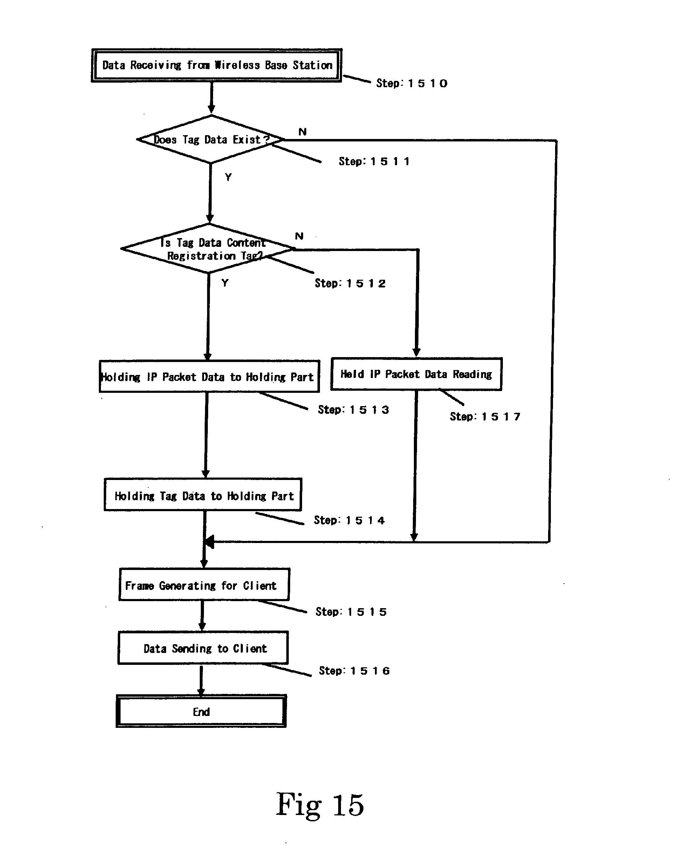

Figure 15 is a diagram showing a flow of processing executed when a wireless mobile device receives a wireless frame from a wireless base station.

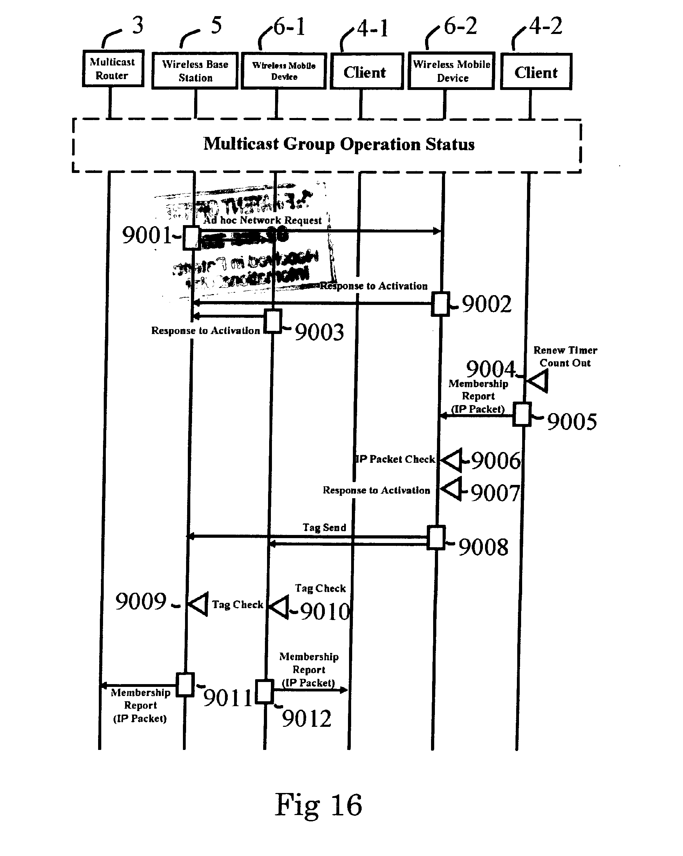

Figure 16 is a diagram showing an example where a membership report is issued using an ad-hoc network after a multicast group is formed.

Now, an embodiment of the present invention will be described.

The present embodiment is suitable for use in a wireless access network formed by a wireless base station connecting IP networks and wireless mobile devices under the supervision of the wireless base station.

More specifically, in this embodiment the wireless mobile devices and the wireless base station insert, as tag information, information regarding a membership report in an IP packet transmitted from a client to a multicast router into a wireless control channel used between the wireless mobile devices and the wireless base station. The wireless mobile devices and the wireless base station process the membership report without a multicast router acting therebetween.

That is, the present embodiment is directed to replacing passing of upper-layer information included in an IP packet by lower-layer communications between a wireless base station and wireless mobile devices.

Here, a client may be considered to comprise a computing device connected to the radio mobile device and a computing processing means to use multicast-data in the radio mobile device.

Fig. 7 is a diagram showing relationship between the OSI model and a system according to the embodiment.

A client 4 encapsulates data in order of an upper-layer protocol 450, an IP protocol 451, a media access control/logical link control (MAC/LLC) 452, and wired physical-layer processing (wired PHY processing), and outputs a resulting packet to a wireless mobile device 6.

The wireless mobile device 6 executes protocol processing on the packet from the client 4 in order of wired PHY processing 653 and MAC/LLC 652. Furthermore, in bridge processing 650, the wireless mobile device 6 executes data processing 651 after the MAC/LLC 652 to read data regarding a membership report and to generate tag information. The membership report is information written in an IP header and needed for the distribution of multicast data. Then, the wireless mobile device 6 executes wireless link control 654 and wireless physical-layer processing (wireless PHY processing) 655 to combine the tag generated in the bridge processing 650 and the IP packet into a single wireless frame, and sends the wireless frame to the wireless base station.

In the wireless interface segment, the IP packet is transmitted in a traffic channel of the wireless frame, and the tag information is transmitted in a wireless control channel of the wireless frame.

A wireless base station 5 executes protocol processing in order of wireless PHY processing 553 and wireless link control 552 on the wireless frame from the wireless mobile device 6. Then, when it is recognized in bridge processing 550 that tag information includes information regarding a membership report, the wireless base station 5 executes data processing 551 for the membership report. Furthermore, the wireless base station 5 executes the wireless link control 552 and the wireless PHY processing 553, and issues a membership report to the client 4 via the wireless mobile device 6.

The IP packet extracted in the wireless link control 552 undergoes the bridge processing 550 in the base station 5, and then undergoes MAC/LLC 554 and wireless PHY processing 555, and the result is transferred to a multicast router 3.

The multicast router 3 executes protocol processing of wired PHY processing 353 and MAC/LLC 352, and then executes IP protocol processing 351 and multicast control 350.

A multicast server 1 executes protocol processing of wired PHY processing 153 and MAC/LLC 152, and then executes IP protocol processing 351 and upper-layer protocol processing 152.

Fig. 8 shows an example of replacing passing of upper-layer information included in an IP packet by lower-layer communications between a wireless base station and a wireless mobile device. Fig. 8 shows a state where a client 4-2 has already received multicast data and a client 4-1 newly registers membership.

When a multicast service is started, the multicast router 3 issues a membership query to each client (step 7000).

When a predetermined time T1 elapses since the membership query and the value of a membership update timer counts out (step 7001), the client 4-1 transfers an IP packet to a wireless mobile device 6-1, and issues a membership report (step 7002).

The wireless mobile device 6-1 connected to the client 4-1 terminates the IP packet data from the client 4-1, and checks whether a "membership report" message is included (step 7003).

At this time, when a "membership report" message is included in IP packet data and a multicast address assigned is a new address, the wireless mobile device 6-1 registers (holds) the IP packet data (step 7004) and generates tag information (i.e., a new tag) for reporting an identification number to the wireless base station (step 7005).

Then, the IP packet data is transmitted in the traffic channel of the wireless frame and the new tag is transmitted in the wireless control channel of the wireless frame to the wireless base station 5 (step 7006).

The wireless base station 5 extracts tag data from the wireless control channel of the wireless frame, and checks the content thereof (step 7007).

When it is determined through the checking that the IP packet data includes a membership report and the content of the tag information is a "new tag", the wireless base station 5 recognizes that the IP packet transmitted together with the "new tag" is to be registered in the wireless base station 5.

The wireless base station 5 registers (holds) the IP packet data (step 7008), and forwards the IP packet data to an upper-layer network (step 7010).

Furthermore, the wireless base station 5 generates tag data (i.e., a registration tag) for registration (holding) of the IP packet data and for reporting an identification number (Step 7009).

Then, the wireless base station 5 sends the registration tag and the IP packet data to another wireless mobile device 6-2 (step 7011).

Similarly to the case of reception by the wireless base station 5, the wireless mobile device 6-2 checks the content of the tag data (step 7012). Furthermore, the wireless mobile device 6-2 recognizes that the content of the tag data is a "registration tag" as a result of the checking, and registers (holds) the IP packet data transmitted together with the "registration tag" (step 7013). Then, the wireless mobile device 6-2 forwards the IP packet data to a client 4-2 (step 7014).

Then, the multicast group enters an operation status.

Fig. 9 shows a state where a membership report initiated by a new tag has been completed and the multicast group has entered an operation status. In Fig. 9, the client 4-1 and the client 4-2 are the members of the multicast.

The multicast router 3 periodically issues a membership query to each client (step 8000).

When a predetermined time T2 elapses since the membership query and the value of a membership update timer counts out (step 8001), the client 4-2 transfers an IP packet to the wireless mobile device 6-1 and issues a membership report (step 8002).

The wireless mobile device 6-2 connected to the client 4-2 terminates the IP packet data from the client 4-2, and checks whether a "membership report" message is included (step 8003).

Since it is understood that the client 4-2 has finished a membership report in step 7013 shown in Fig. 8, in Fig. 9, the wireless mobile device 6-2 creates a registration tag for continuing membership (step 8004).

Then, the wireless mobile device 6-2 sends the registration tag on the wireless control channel of a wireless frame. In sending the wireless frame, the wireless mobile device 6-2 does not place the IP packet from the client 4-2 on the traffic channel of the wireless frame (step 8005).

The wireless base station 5 extracts the tag information from the wireless control channel of the wireless frame, and checks the content thereof (step 8006).

Upon recognizing that the tag information is a registered tag instead of a new tag, the wireless base station 5 reads the IP packet held in step 7008 shown in Fig. 8 (step 8007). The wireless base station 5 transfers the IP packet that has been read to the multicast router 3 as a membership report (step 8008).

Furthermore, the wireless base station 5 sends the registered tag to the wireless mobile device 6-1 connected to the client 4-1 (step 8009).

That is, the wireless base station 5 sends a wireless frame containing tag information including a tag identification number (i.e., a registration continuation tag) to the wireless mobile device 6-1. At this time, the wireless base station 5 does not send IP packet data to the wireless mobile device 6-1. Thus, the load of wireless resources in the wireless interface segment, caused by transmission of data relating to membership reports, can be alleviated.

The wireless mobile device 6-1 detects the tag information from the wireless frame received from the wireless base station 5, and checks the content of the tag (step 8010).

When the content of the tag is a registration tag, the wireless mobile device 6-1 reads the IP packet held in a holding unit (step 8011).

Then, the wireless mobile device 6-1 sends the IP packet that has been read to the client 4-1 (step 8012).

Fig. 10 shows a system for implementing the operations shown in Figs. 8 and 9.

The client 4-1 sends an IP packet including a membership report to the wireless mobile device 6-1. This corresponds to step 7002 shown in Fig. 8.

The wireless mobile device 6-1 executes wired PHY processing by a wired-interface processor 615 on the IP packet from the client 4-1, and sends the processed IP packet to an IP-packet terminator 614.

The IP-packet terminator 614 terminates the IP packet.

Before specifically describing termination of an IP packet, a relationship between an IP packet and tag information will be described with reference to Fig. 11.

Fig. 11(a) shows the structure of an IP packet, and Fig. 11(b) shows the structure of a tag.

The IP packet shown in Fig. 11(a) is divided into an IP header and an IGMP message. The IGMP message is a part of a payload attached to the IP header.

The IP header includes version information, a traffic class, a flow label, a payload length, a next header, a hop limit, a source address, and a destination address.

The version information represents a version of the Internet Protocol. The traffic class represents what type of content is included in the payload. When the traffic class is represented by a specific pattern, the traffic class represents that the payload is membership information. The flow label represents management information of data. The payload length represents the length of the payload. The next header represents the position of the next header. The hop limit represents the number of maximum allowable hops of the packet. The source address represents an address of a source. The destination address represents an address of a destination.

The IGMP message includes a type, a maximum response time, a checksum, and a multicast group address.

A certain value in the type field represents a membership report, and another certain value in the type field represents a leave membership message. The maximum response time represents a maximum time before a response. The checksum is used to detect an error that occurs during communications.

The multicast group address represents a multicast group ID.

The IP-packet terminator 614 shown in Fig. 10 detects a traffic class and a destination address from the header of the IP packet shown in Fig. 11(a), and detects a type from the payload of the IP packet.

Then, the IP-packet terminator 614 sends the results of the detection to a checker 612, and forwards the IP packet frame to a wireless-frame transmitter 613.

The checker 612 checks whether the destination address has already been registered by comparison with destination addresses of IP packets stored in the holding unit 616. Then, the checker 612 sends the result of the checking to a wireless-frame tag generator 611. Furthermore, when the destination address is a new address, the checker 612 registers the IP packet data in the holding unit 616.

The wireless-frame tag generator 611 generates a new tag when the destination address is a new address, and sends the new tag to the wireless-frame transmitter 613. When the destination address is a registered address, the wireless-frame tag generator 611 generates a registration tag, and sends the registration tag to the wireless-frame transmitter 613.

Fig. 11(b) shows tag information generated by the wireless-frame tag generator 611. The tag information (tag data) is composed of 8 bits. The high-order 2 bits represents a tag type. A tag type 00 represents a new tag, a tag type 01 represents a registration tag, and a tag type 10 represents deletion of a registration tag. A tag type 11 is reserved. The 3rd to 7th high-order bits represent a type number. The type number corresponds to the destination address or the multicast group address shown in Fig. 11(a).

When the destination address is a new address, the wireless-frame tag generator 611 places 00 as the tag type, and places a value corresponding to the destination address or the multicast group address in the field of type number.

Thus, wireless base stations and wireless mobile devices can recognize the type of information in an IP packet by detecting the tag type and tag type number in tag information.

The wireless-frame transmitter 613 forwards the tag information from the wireless-frame tag generator 611 onto the wireless control channel. Furthermore, when the tag information from the wireless-frame tag generator 611 is a new tag, the wireless-frame transmitter 613 forwards the IP packet from the IP-packet terminator 614 onto the traffic channel. When the tag information is a registration tag, the wireless-frame transmitter 613 does not forward the IP packet onto the traffic channel. Then, the wireless-frame transmitter 613 sends a wireless frame on the wireless control channel and the traffic channel to the wireless base station 5.

A wireless-frame receiver 560 of the wireless base station 5 receives the wireless frame from the wireless mobile device 6-1. The result of reception by the wireless-frame receiver 560 is forwarded to a tag extractor 561.

The tag extractor 561 extracts the tag information from wireless control channel of the wireless-frame, and forwards the tag information to a tag checker 565. Furthermore, the tag extractor 561 forwards the IP packet in the traffic channel to an IP-packet receiver 562.

When it is recognized that the tag type is a new tag, the tag checker 565 exercises control so that the IP-packet receiver 562 stores the IP packet in a holding unit 564 and so that a tag generator 566 generates a registration tag.

On the other hand, when it is recognized that the tag type is a registration tag, the tag checker 565 exercises control so that the IP-packet receiver 562 reads an IP packet from the holding unit 564 and so that the tag generator 566 generates a registration tag.

In the case of a new tag, under the control of the tag checker 565, the IP-packet receiver 562 holds the IP packet in the holding unit 564, and forwards the IP packet to a wired-interface processor 563. In the case of a registration tag, under the control of the tag checker 565, the IP-packet receiver 562 forwards the IP packet read from the holding unit 564 to the wired-interface processor 563.

In the case of a new tag, under the control of the tag checker 565, the tag generator generates a registration tag and forwards the registration tag to a wireless-frame transmitter 567.

Furthermore, in the case of a new tag, the wireless-frame transmitter 567 reads the IP packet held in the holding unit 564 and forwards the IP packet onto the traffic channel, and forwards the tag information from the tag generator 566 onto the wireless control channel, thereby sending a wireless frame to the wireless mobile device 6-2.

When a registration tag is recognized through the checking by the tag checker 565, the wireless-frame transmitter 567 forwards the tag information from the tag generator 566 onto the wireless control channel and sends a wireless frame to the wireless mobile device 6-2. At this time, the wireless-frame transmitter 567 does not place the IP packet onto the traffic channel.

The wireless mobile device 6-2 receives the wireless frame from the wireless base station 5 by a wireless-frame receiver 623.

The wireless-frame receiver 623 forwards the tag information to a checker 621, and forwards the IP packet to an IP-packet generator 624.

The checker 612 checks whether the type number in the tag information is a registered number by comparison with IP packets stored in a holding unit 626. When the type number is a registered type number, the checker exercises control so that the IP-packet generator 624 extracts an IP packet from the holding unit 626. When the type number is an unregistered number, the checker 621 exercises control so that the IP-packet generator 624 stores the IP packet in the holding unit 626.

When the type number is a registered number, the IP-packet generator 624 forwards the IP packet read from the holding unit 626 to a wired-interface processor 625. Furthermore, when the type number is a registered number, the IP-packet generator 624 forwards the IP packet received to the wired-interface processor 625 and stores the IP packet in the holding unit 626.

The wired-interface processor 625 forwards the IP packet from the IP-packet generator 624 to the client 4-2.

According to the scheme described above, irrespective of an IP packet including a copy of a membership report distributed from the multicast router 3 to the wireless base station 5, the wireless base station 5 can execute a membership report on behalf. This serves to reduce the load of wireless resources.

Fig. 12 shows the configuration of the wireless mobile devices 6-1 and 6-2. In order to describe a flow of processing, a configuration for reception of data from a client is shown regarding the wireless mobile device 6-1, and a configuration for reception of data from a wireless base station is shown regarding the wireless mobile device 6-2. However, in each of the wireless mobile devices 6-1 and 6-2, configurations for transmission and reception of data to and from a wireless base station are integrated. Thus, functions corresponding to those in Fig. 10 are designated by the same numerals and descriptions thereof will be omitted.

Since the holding units 616 and 626 shown in Fig. 10 are the same, the holding units 616 and 626 are shown together in Fig. 12.

Since the holding units 616 and 626 are integrated, the checker 621 can distinguish new tag information and registered tag information using IP packet data held in the holding unit 612.

Fig. 13 shows a flow of processing that is executed when the wireless mobile device 6-1 or 6-2 receives IP packet data from a client.

In step 1310, the wireless interface processor of the wireless mobile device receives an IP packet from the client.

In step 1311, the IP packet terminator of the wireless mobile device detects an IP header from the data received. The process then proceeds to step 1312.

In step 1312, the checker reads IP packet data held in the holding unit. The process then proceeds to step 1313.

In step 1313, the checker compares the IP packet data held in the holding unit with the header of the IP packet received from the client.

When the received data matches existing data, the process proceeds to step 1314. Otherwise, the process proceeds to step 1317.

In step 1317, it is checked when the destination IP address is a multicast address. When it is determined in step 1317 that the destination IP address is a multicast address, the process proceeds to step 1318. When it is determined in step 1317 that the destination IP address is not a multicast address, the process proceeds to step 1315. In step 1318, it is checked whether the traffic field of the IP header represents an IGMP message. When it is determined in step 1318 that the traffic field represents an IGMP message, the process proceeds to step 1319. When it is determined in step 1318 that the traffic field does not represent an IGMP message, the process proceeds to step 1315.

In step 1319, it is checked whether the IGMP type is a membership report. When it is determined in step 1319 that the IGMP type is a membership report, the process proceeds to step S1320. When it is determined in step 1319 that the IGMP type is not a membership report, the process proceeds to step 1315.

In step 1320, a new tag is generated. The process then proceeds to step 1321.

In step 1321, the IP packet is stored in the holding unit. The process then proceeds to step 1315.

When the IP headers match in step 1313, in step 1314, a registration tag is generated. The process then proceeds to step 1315.

In step 1315, the registration tag generated in step 1314 or the new tag generated in step 1320 is forwarded onto the wireless control channel. In the case of a new tag, the IP packet is forwarded onto the traffic channel to form a wireless frame involving the wireless control channel and the traffic channel. In the case of a registration tag, the IP packet is not forwarded onto the traffic channel in step 1315.

In step 1316, the wireless frame created in step 1315 is sent to a base station.

Fig. 14 shows a flow of processing executed when the wireless base station 5 receives a wireless frame from the wireless mobile device 6-1 or 6-2.

In step 1410, the wireless base station 5 receives a wireless frame from the wireless mobile device 6-1 or 6-2.

In step 1411, it is checked whether tag information is included in the wireless control channel of the wireless frame. When tag information is included, the process proceeds to step 1412. When tag information is absent, the process proceeds to step 1421.

When it is determined in step 1412 that the tag information is not a membership report, i.e., when the tag information is a membership leave message, the process proceeds to step 1421. When the tag information is a membership report, the process proceeds to step 1413.

In step 1413, the content of the tag information is compared with the data of the IP packet stored in the holding unit to determine whether the tag received is a new tag. When the tag received is a new tag, the process proceeds to step 1414. When the tag received is not a new tag, the process proceeds to step 1420.

In step 1414, the IP packet is stored in the holding unit. The process then proceeds to step 1415.

In step 1415, a registration tag is generated. The process then proceeds to step 1416.

In step 1416, a copy of the IP packet stored is created. The process then proceeds to steps 1417 and 1421.

In step 1417, the registration tag generated is forwarded onto the wireless control channel to create a wireless frame. The process then proceeds to step 1418.

In step 1418, the wireless frame is sent to the wireless mobile device. The process then proceeds to step 1419.

In step 1419, it is checked whether transmission to all the terminals has been completed. When transmission to all the terminals has not been completed, the process returns to step 1417. When transmission to all the terminals has been completed, the process is exited.

In step 1420, the IP packet data held in the holding unit is read. The process then proceeds to step 1421.

In step 1421, the IP packet read in step 1420, the IP packet copied in step 1415, the IP packet without tag information, or the IP packet not including a membership report is placed into a frame directed to a wired network. The process then proceeds to step 1422.

In step 1422, the frame generated in step 1421 is forwarded onto the wired network. The process is then exited.

Fig. 15 shows a flow of processing that is executed when the wireless mobile device 6-1 or 6-2 receives a wireless frame from the wireless base station 5.

In step 1510, the wireless mobile device receives data from the base station. The process then proceeds to step 1511.

In step 1511, it is checked whether tag information is included in the wireless frame. When tag information is included, the process proceeds to step 1512. When tag information is not included, the process proceeds to step 1515.

In step 1512, the tag information is compared with the data of the IP packet stored in the holding unit to determine whether the tag is a new registration tag or an existing registration tag. When the tag is a new registration tag, the process proceeds to step 1513. When the tag is an existing registration tag, the process proceeds to step 1517.

In step 1513, an IP packet in the traffic received from the wireless base station is stored in the holding unit. The process then proceeds to step 1514.

In step 1514, the tag information received is stored in the storage unit. The process then proceeds to step 1515.

In step 1515, the IP packet extracted from the traffic or the IP packet read in step 1517 is placed into a frame directed to a client. The process then proceeds to step 1516.

In step S1516, the frame generated in step 1515 is sent to the client. The process is then exited.

When an existing registration tag is recognized in step 1512, an IP packet is not transmitted from the wireless base station, so that an IP packet stored in the holding unit is read. The process then proceeds to step 1515.

Fig. 16 shows a case where a membership report is issued using an ad-hoc network after the multicast group shown in Fig. 9 is formed.

That is, by using a common channel for exchanging data between a wireless base station and wireless mobile devices under the supervision of the wireless base station, a wireless mobile device can issue a membership report simultaneously to the wireless base station and to the other wireless mobile devices. This may improve the efficiency of exchanging control messages in IP multicast.

After the multicast group is formed, the wireless base station 5 sends an ad-hoc-network activating request to the wireless mobile devices 6-1 and 6-2 (step 9001).

The wireless mobile devices 6-1 and 6-2 return responses that an ad-hoc network has been activated to the wireless base station 5 (steps 9002 and 9003).

When a predetermined time elapses since a membership query according to the timer of the client 4-2, an IP packet including a membership registration request is sent to the wireless mobile devices 6-1 and 6-2 (steps 9004 and 9005).

The wireless mobile device 6-2 checks the IP packet (step 9006). Furthermore, the wireless mobile device 6-2 generates a tag for a membership report (step 9007).

The tag generated is placed on the common wireless channel, and is transmitted from the wireless mobile device 6-2 to the wireless mobile device 6-1 and the wireless base station 5 (step 9008).

The wireless base station 5 and the wireless mobile device 6-1 check the tag information (steps 9009 and 9010).

Then, the wireless base station 5 sends the IP packet including the membership report to the multicast router 3 (step 9011).

The wireless mobile device 6-1 sends the IP packet including the membership report to the client 4-1.

Thus, it is not needed to send a registration tag from the wireless base station 5 to the wireless mobile devices 6-1 and 6-2, and the registration tag can be received directly between the wireless mobile devices. Thus, the load of processing by the wireless base station 5 is reduced, and delay associated with membership reports can be avoided.

When an ad-hoc network is formed as described above, a wireless base station carries out communications in ordinary wireless frames unless ad-hoc-mode responses are received from all the wireless mobile devices.

## Claims

1. A radio access network having a wireless base station connected to an internet-protocol network and a wireless mobile device, comprising:
a wireless frame including a wireless control channel and a traffic channel, the wireless frame being sent and received over the radio access network; and
a tag information having information transferring an internet-protocol packet data in the traffic channel of the wireless control channel;
the wireless base station and the radio mobile device controlling the internet-protocol packet data in accordance with the tag information.

2. A wireless mobile device for communicating with wireless base station and using a wireless frame with a wireless control channel and a traffic channel, comprising:
a checking part for checking information in an internet-protocol packet from client whether the information include a membership-report information for keeping multicast communication;
a tag information generation part for adding a tag information to a wireless control channel in wireless frame in accordance with a result of the checking part; and
a wireless frame sending part sending the wireless frame to the wireless base station, the wireless frame including the internet-protocol packet and the tag information.

3. A wireless base station for communicating with a wireless mobile device using a wireless frame with a wireless control channel and a traffic channel, comprising:
a wireless frame receiving part receiving the wireless frame;
a tag extraction part for taking out received the tag information on the wireless control channel in the wireless frame for keeping multicast communication;
a tag checking part checking the tag information whether the tag information is new or not;
a tag information generation part for generating a tag information in accordance with a result of the tag checking part, the tag information keeping multicast communication;
a wireless frame sending part for sending the wireless control channel to the wireless mobile device, the wireless control channel including the tag information from the tag generation part.

4. A wireless mobile device for communicating with a wireless base station and using a wireless frame with a wireless control channel and a traffic channel, comprising:
a wireless frame receiving part receiving the wireless frame from the wireless base station;
a tag extraction part for taking out received the tag information on the wireless control channel in the wireless frame keeping multicast communication;
a tag checking part checking the tag information whether the tag information is new or not;
an internet-protocol packet generating part for generating an internet-protocol packet, and sending to a client in accordance with the tag information of a result of the tag checking part.
